# EUROPEAN PATENT APPLICATION

(11) **EP 4 485 815 A1**
(43) Date of publication of application: **01.01.2025**
(21) Application number: 23386052.7
(22) Date of filing: 29.06.2023
(51) Int. Cl.: H04B 7/0452, H04L 5/00

(54) **METHOD AND APPARATUS FOR MULTI-USER MULTIPLE INPUT MULTIPLE OUTPUT (MU-MIMO) COMMUNICATION**

(71) Applicant: Deutsche Telekom AG, 53113 Bonn (DE); HELLENIC TELECOMMUNICATIONS ORGANIZATION S.A., 15124 Athen, Marousi (GR)
(72) Inventor: BEYER, Jürgen, 57250 Netphen (DE); KLATT, Axel, 50999 Köln (DE); ZIMMERMANN, Gerd, 64331 Weiterstadt (DE); NIKOLITSA, Eftychia, 15122 Maroussi (GR)
(74) Representative: Schwöbel, Thilo K.

(57) **Abstract**

The invention relates to a method for using a user equipment with a radio access network of or associated or assigned to a mobile communication network, wherein the radio access network comprises at least one base station entity, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources,
wherein, in order to use both the user equipment and the further user equipment with the radio access network using multi-user multiple input multiple output, MU-MIMO, technology, the method comprises the step of
-- the user equipment receiving first transmission configuration information in view of applying multi-user multiple input multiple output, MU-MIMO, technology,
-- the further user equipment receiving second transmission configuration information in view of applying multi-user multiple input multiple output, MU-MIMO, technology, as well as
-- applying multi-user multiple input multiple output, MU-MIMO, technology involving the user equipment and the further user equipment, wherein the first transmission configuration information comprises at least a part of the second transmission configuration information.

## Description

### BACKGROUND

The present invention relates a method for using a user equipment with a radio access network of or associated or assigned to a mobile communication network, wherein the radio access network comprises at least one base station entity, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources.

Furthermore, the present invention relates to a user equipment for being used with a radio access network of or associated or assigned to a mobile communication network, wherein the radio access network comprises at least one base station entity, wherein the user equipment is served by the base station entity using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources.

Additionally, the present invention relates to a base station entity for using a user equipment with a radio access network of or associated or assigned to a mobile communication network, wherein the base station entity is part of the radio access network, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources.

Furthermore, the present invention relates to a system or to a mobile communication network for using a user equipment with a radio access network of or associated or assigned to a mobile communication network, wherein the radio access network comprises at least one base station entity, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources.

Furthermore, the present invention relates to a program and to a computer-readable medium for using a user equipment with a radio access network of or associated or assigned to a mobile communication network, wherein the radio access network comprises at least one base station entity, wherein the base station entity serves the user equipment using multi-user multiple input multiple output, MU-MIMO, technology according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which radio cells are typically served by associated base station entities, especially eNBs or gNBs, which typically belong to (or are used by or associated or assigned to) a mobile network operator (MNO).

In conventionally known mobile communication networks, an air interface between a user equipment (or a mobile station) on the one hand, and an antenna entity or functionality (e.g. as part of a base station entity) on the other hand is used for serving the user equipments with communication services. Via such an air interface - or, using such an air interface - radiofrequency (electro-magnetic) signals are transmitted between the user equipment (or mobile station), and the base station entity or antenna entity or functionality, respectively, either in uplink direction, i.e. transmitted by the user equipment or mobile station (and towards the base station entity), or in downlink direction, i.e. transmitted by the respective base station entity (and towards the user equipment or mobile station.

Furthermore, currently known antenna technology typically involves an antenna (or an antenna arrangement or an antenna array comprising a plurality of antenna elements) to have (or to generate) a plurality of antenna lobes or antenna beams. Such antenna arrangements or an antenna arrays provide the possibility to realize multi-user multiple input multiple output, MU-MIMO, which is a key technology in 5G networks that enhances data rates and network capacity by supporting simultaneous data transmission on the same time-frequency resources to more than one user equipment. This is enabled by a large number of transmission chains (TX) and reception chains (RX) at base station entities (gNB in 5G notation) with a corresponding large number of antenna elements. Such gNB antenna systems with 32 TX&RX (or, short TRx) or 64TRx utilize advanced beam forming technologies for single user multiple input multiple output, SU MIMO, as well as for MU MIMO where the antenna pattern is dynamically adjusted and radio frequency (RF) energy is radiated individually to user equipments, thereby improving the signal quality; in case of SU MIMO, this technology increases the coverage area of a radio cell and - due to more directive antenna patterns - reduces the interference in neighboring cells; in case of MU-MIMO beam forming is used for other purposes: the base station entity or gNB identifies user equipments in a radio cell that are able to be served on the same time-frequency resources - they are 'paired'. If the radio channel to those user equipments fulfill certain conditions, the base station entity or gNB antenna dynamically adapts its antenna pattern such that individual radiofrequency beams are formed towards such user equipments which are able to be paired. Since they are using the same time-frequency resources their summed up data rate is higher than in the case of SU MIMO (i.e. where each user equipment gets its own time-frequency resource). Thus, the capacity of the radio cell increases. Hence, MU-MIMO technology enables a more efficient use of network resources, improves data rates.

However, even though multi-user multiple input multiple output, MU-MIMO, technology allows to increase cell capacity, there is nevertheless always the need to even further reduce interference effects and/or the occurrence of interference present in the radiofrequency signals transmitted from a base station entity to the paired user equipments in a cell.

### SUMMARY

An object of the present invention is to provide a technically simple, effective and cost-effective solution for using a user equipment with a radio access network when using multi-user multiple input multiple output, MU-MIMO, technology, wherein intra-cell interference effects and/or the occurrence of intra-cell interference is able to be efficiently reduced. A further object of the present invention is to provide a corresponding user equipment, a corresponding base station entity, a corresponding system or mobile communication network, as well as a corresponding program and computer-readable medium.

The object of the present invention is achieved by a method for using a user equipment with a radio access network of or associated or assigned to a mobile communication network, wherein the radio access network comprises at least one base station entity, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources, wherein, in order to use both the user equipment and the further user equipment with the radio access network using multi-user multiple input multiple output, MU-MIMO, technology, the method comprises the step of
-- the user equipment receiving first transmission configuration information in view of applying multi-user multiple input multiple output, MU-MIMO, technology,
-- the further user equipment receiving second transmission configuration information in view of applying multi-user multiple input multiple output, MU-MIMO, technology, as well as
-- applying multi-user multiple input multiple output, MU-MIMO, technology involving the user equipment and the further user equipment, wherein the first transmission configuration information comprises at least a part of the second transmission configuration information.

It is thereby advantageously possible according to the present invention to be able to reduce interference effects and/or the occurrence of interference when applying multi-user multiple input multiple output, MU-MIMO, technology.

Especially, the user equipment is able to be informed (as part of the first transmission configuration information) about the transmission configurations (i.e. especially transmission parameters) used for the paired further user equipment (thus, being part of the second transmission configuration information) - i.e. transmission configurations and/or signaling configurations (or transmission parameters) used, by the base station entity, for being used or applied when communicating with the other user equipment, especially transmission configurations and/or transmission parameters that are not essential to be necessarily known (in order to successfully apply multi-user multiple input multiple output, MU-MIMO, technology) by the user equipment itself; as a consequence thereof, the user equipment is able to adapt its own interference-reducing behavior in accordance with this knowledge (about the transmission parameters or transmission configurations and/or related signaling used with, or specific for, the further user equipment), especially in view of configuring its own reception parameters or reception configuration and, especially, related to the own radio cell.

Of course (and symmetrically) according to the present invention, it is proposed that also the further user equipment receives, or is able to be informed (as part of the second transmission configuration information) about transmission configurations and/or transmission parameters (being part of the first transmission configuration information) used for the user equipment, that is paired with the further user equipment - i.e. transmission configurations and/or related signaling configurations used, by the base station entity, for being used or applied when communicating with the user equipment, especially transmission configurations or transmission parameters and/or related signaling that are not essential to be necessarily be known (in order to successfully apply multi-user multiple input multiple output, MU-MIMO, technology) by the further user equipment.

In the context of the present invention, is to be understood that the described scenario of the user equipment and the further user equipment being served (or being provided with transmission resources) by the base station entity using multi-user multiple input multiple output, MU-MIMO, technology, i.e. being paired (or co-scheduled) using this technology - i.e. in a manner such that, at least regarding specific time-frequency resources of the air interface of the base station entity, both the user equipment and the further user equipment are simultaneously served or provided with transmission resources - is not limited to 'pairing' (or co-scheduling) only two user equipments (i.e. the user equipment and the further user equipment); it might very well also be extended to more than two user equipment, especially three, four, five, six, seven or eight user equipments, in which case the basic principle according to the present invention would be extended to such a scenario, i.e., as a prerequisite, all such user equipments are provided with (corresponding or respective) transmission configuration information. The transmission of such (basic or essential) transmission configuration is required in order to be able to implement or apply multi-user multiple input multiple output, MU-MIMO, technology. However, according to the present invention, in addition to each of such user equipments receiving its respective (essential) transmission configuration information, at least a part of such user equipments additionally receive transmission configuration information that is (also) transmitted to at least one other user equipment of the considered ('paired' or co-scheduled) user equipments; especially, this additional transmission configuration information is provided to a specific user equipment in dependency of the (angular) distance of the considered pair of user equipments: The lower this (angular) distance (between two considered user equipments that are part of a group of more than two user equipment - 'paired' or co-scheduled according to multi-user multiple input multiple output technology), the more such additional transmission configuration information (solely relating to other paired user equipments, and, hence non-essential to the receiving user equipment) is provided to a considered user equipment.

In conventionally known mobile communication networks, although advanced beam forming techniques are used for applying multi-user multiple input multiple output technology, it is typically not possible to completely avoid intra-cell interference - especially caused by the fact that the paired user equipments are using the same time frequency resources (i.e. the user equipment being served, by the base station entity, by means of applying multi-user multiple input multiple output technology, in a manner such that, at least regarding specific time-frequency resources of the air interface of the base station entity, both the user equipment and the further user equipment are simultaneously served, by the base station entity, using multi-user multiple input multiple output technology). Thus, the beams from the serving base station antenna directed to one of the paired user equipments cannot be made sufficiently small (leading to intra-cell interference also potentially affecting the other paired user equipment (= co-scheduled user equipments)) and/or (unavoidable) multi-path propagation additionally contributes to such intra-cell interference effects. Since the intra-cell interference decreases with increasing angular separation - seen from the base station entity or the gNB antenna - a certain spatial separation of the user equipments is required to pair them for the application of multi-user multiple input multiple output technology.

Furthermore, in currently known mobile communication networks, the paired user equipments typically do not know the transmission configuration (such as, e.g., DMRS ports, MCS, etc.) that is used for the other co-scheduled user equipment (or plurality of other user equipments in case that the multi-user multiple input multiple output technology is applied using more than two co-scheduled or paired user equipments).

According to the present invention, it is proposed to provide all such paired user equipments not only with the configuration information that is, respectively, essential to each one of them for implementing and applying multi-user multiple input multiple output technology, but also to provide this information (i.e. the transmission configuration, such as, e.g., DMRS ports, MCS, etc.) of the other co-scheduled user equipments (in a considered radio cell) or at least part thereof, especially in dependency of the (angular) distance of the considered pair of user equipments (from the perspective of the base station entity). For a (considered) user equipment to not only know the transmission configuration (applied by the base station entity) to transmit (typically downlink) data to that (considered) user equipment (hereinafter also called necessary or essential transmission configuration) but, in addition, transmission configuration or pieces of transmission configuration information that are part of the necessary or essential transmission configuration (applied by the base station entity) regarding other co-scheduled (or paired) user equipments and that are, especially, specific to such other co-scheduled (or paired) user equipments (i.e. regarding the (considered) user equipment such transmission configuration or pieces of transmission configuration information regarding such other co-scheduled (or paired) user equipments is not essential or not necessary) advantageously provides the possibility, according to the present invention, that the (considered) user equipment is able to reduce the interference between the co-scheduled (or paired) user equipments by interference mitigation techniques.

This advantageously results in, or provides the possibility of, an increased data rate of the paired user (within the considered radio cell).

According to the present invention, it is furthermore advantageously possible - due to the achievable lower intra-cell interference - that the required spatial separation between paired user equipments is able to be reduced; hence, multi-user multiple input multiple output technology is able to be used more often leading to better user experience and cell capacity. One solution proposed according to the present invention is - as at least a part of the transmission configuration - to signal, to the co-scheduled user equipments, the DMRS ports (or demodulation reference signal port information) of the other (co-scheduled) user equipments.

Hence, according to the present invention, it is proposed - in case of using multi-user multiple input multiple output technology (i.e. in case of co-scheduled, or paired, user equipments) - to inform at least one paired user equipment about the transmission configuration, at least parts thereof and especially at least the DMRS ports or demodulation reference signal port information, of at least one further co-scheduled user equipment (i.e. in case of two co-scheduled user equipments (called the user equipment and the further user equipment), at least the user equipment is provided with the transmission configuration (or, at least, parts thereof and especially at least the DMRS ports) that is specific to the further user equipment (i.e. non-essential to the user equipment), i.e. the first transmission configuration information comprises at least a part of the second transmission configuration information; however, it is also preferred according to the present invention that (symmetrically) also the further user equipment is provided with the transmission configuration (or, at least, parts thereof and especially at least the DMRS ports) that is specific to the user equipment, i.e. non-essential to the further user equipment).

According to the present invention, such a transmission (to the considered user equipment) of such (non-essential, regarding the user equipment) transmission configuration or transmission configuration information (that is related (as essential transmission configuration information to the further co-scheduled (or paired) user equipment) is especially realized using radio resource control, RRC, signaling or medium access control, MAC, signaling informing at least one paired user equipment about the transmission configuration (but at least the DMRS ports) of at least a further co-scheduled user equipment.

According to the present invention, it is especially preferred that such transmission (of non-essential transmission configuration information) is dependent on the spatial separation (or angular separation) of the co-scheduled or paired user equipments: If the spatial separation of the co-scheduled user equipments is sufficiently small (i.e. if they are not sufficiently spatially separated) , such transmission is provided for, and, in case the user equipments are well spatially separated, this information is not needed to be transmitted; this decision, of course, results in a reduced signaling overhead in the considered radio cell (i.e. especially the base station entity - knowing about the special separation of the co-scheduled or paired user equipments - decides that such information or transmission is not needed at least for one (or a plurality) of the co-scheduled user equipments and, consequently, refrains from transmitting such (non-essential) information).

According to the present invention, it is advantageously possible and preferred that the first transmission configuration information comprises first transmission parameters used for serving the user equipment and wherein the second transmission configuration information comprises second transmission parameters used for serving the further user equipment, wherein the first transmission configuration information comprises at least part of the second transmission parameters, especially a part of the second transmission parameters that are solely related to the transmission between the base station entity and the further user equipment.

It is thereby advantageously possible to realize more efficient and/or more adapted transmission conditions in order to serve both the user equipment and the further user equipment: The first transmission configuration information (i.e. directed to the user equipment) comprises at least part of the second transmission parameters, especially a part of the second transmission parameters that are solely (i.e. exclusively) related to the transmission between the base station entity and the further user equipment. Likewise - and symmetrically - it is preferred that the second transmission configuration information (i.e. directed to the further user equipment) comprises at least part of the first transmission parameters, especially a part of the first transmission parameters that are solely (i.e. exclusively) related to the transmission between the base station entity and the user equipment.

According to the present invention, it is advantageously furthermore possible and preferred that the first transmission configuration information comprises at least one out of the following relating to the second transmission parameters :
-- a demodulation reference signal, DMRS, information (or DMRS port (information)) used with the further user equipment,
- a demodulation reference signal, DMRS, port information used with the further user equipment,
- a modulation coding scheme, MCS, information used with the further user equipment.

It is thereby advantageously possible to implement the present invention comparatively easily and efficiently.

According to the present invention, it is furthermore advantageously possible and preferred that the user equipment utilizes, at least a part of the second transmission parameters, provided in the first transmission configuration information, to calculate/estimate and/or reduce interference created by radiofrequency signals transmitted by the base station entity to the further user equipment on the jointly used specific time-frequency resources.

It is thereby advantageously possible to implement the present invention comparatively easily and efficiently. Especially, it is advantageously possible according to the present invention to adapt the reception configuration and/or the reception conditions regarding one of the user equipment and the further user equipment by means of taking into consideration at least part of the transmission configuration information related to the other one of the user equipment and the further user equipment.

According to the present invention, it is furthermore advantageously possible and preferred that the first and/or second transmission configuration information is provided, by the base station entity, to the user equipment and/or the further user equipment using a dedicated control channel, especially using an Radio Resource Control, RRC, protocol or Medium Access Control, MAC, information elements or Downlink Control Information, DCI, carried on a Physical Downlink Control Channel, PDCCH.

It is thereby advantageously possible to implement the present invention comparatively easily and efficiently.

According to the present invention, it is furthermore advantageously possible and preferred that the first transmission configuration information is transmitted, by the base station entity, to the user equipment by means of one out of the following:
- a single configuration message, the single configuration message comprising all of the first transmission configuration information, especially the first transmission parameters used, by the base station entity, for serving the user equipment as well as at least a part of the second transmission parameters that are solely related to the transmission between the base station entity and the further user equipment,
- at least a first configuration message and a second configuration message, wherein the first configuration message especially comprises the first transmission configuration information, especially regarding the first transmission parameters used, by the base station entity, for serving the user equipment, and wherein the second configuration message especially comprises at least a part of the second transmission parameters that are solely related to the transmission between the base station entity and the further user equipment.

It is thereby advantageously possible to implement the present invention comparatively easily and efficiently, and especially in a flexible and adaptable manner.

Furthermore, the present invention relates to a user equipment for being used with a radio access network of or associated or assigned to a mobile communication network, wherein the radio access network comprises at least one base station entity, wherein the user equipment is served by the base station entity using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources,
wherein, in order to use both the user equipment and the further user equipment with the radio access network using multi-user multiple input multiple output, MU-MIMO, technology, the user equipment is configured such that
- the user equipment receives first transmission configuration information in view of applying multi-user multiple input multiple output, MU-MIMO, technology,
- the multi-user multiple input multiple output, MU-MIMO, technology is applied, involving the user equipment and the further user equipment, wherein the first transmission configuration information comprises at least a part of a second transmission configuration information having been transmitted to the further user equipment.

Furthermore, the present invention relates to a base station entity for using a user equipment with a radio access network of or associated or assigned to a mobile communication network, wherein the base station entity is part of the radio access network, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources, wherein, in order to use both the user equipment and the further user equipment with the radio access network using multi-user multiple input multiple output, MU-MIMO, technology, the base station entity is configured such that
-- the base station entity transmits, to the user equipment, first transmission configuration information in view of applying multi-user multiple input multiple output, MU-MIMO, technology,
- the base station entity transmits, to the further user equipment, second transmission configuration information in view of applying multi-user multiple input multiple output, MU-MIMO, technology, as well as
-- the base station entity applies multi-user multiple input multiple output, MU-MIMO, technology involving the user equipment and the further user equipment, wherein the first transmission configuration information comprises at least a part of the second transmission configuration information.

Furthermore, the present invention relates to a system or to a mobile communication network for using a user equipment with a radio access network of or associated or assigned to a mobile communication network, wherein the radio access network comprises at least one base station entity, wherein the base station entity serves the user equipment using multi-user multiple input multiple output, MU-MIMO, technology, in a manner such that, at least regarding specific time-frequency resources of the air interface of the base station entity, both the user equipment and a further user equipment are simultaneously served by the base station entity or provided with transmission resources,
wherein, in order to use both the user equipment and the further user equipment with the radio access network using multi-user multiple input multiple output, MU-MIMO, technology, the method comprises the step of
- the user equipment receiving first transmission configuration information in view of applying multi-user multiple input multiple output, MU-MIMO, technology,
- the further user equipment receiving second transmission configuration information in view of applying multi-user multiple input multiple output, MU-MIMO, technology, as well as
-- applying multi-user multiple input multiple output, MU-MIMO, technology involving the user equipment and the further user equipment, wherein the first transmission configuration information comprises at least a part of the second transmission configuration information.

Additionally, the present invention relates to a program comprising a computer readable program code which, when executed on a computer and/or on a base station entity of a mobile communication network and/or on a user equipment, or in part on a base station entity and/or in part on a user equipment, causes the computer and/or the base station entity and/or the user equipment to perform the inventive method.

Still additionally, the present invention relates to a computer-readable medium comprising instructions which when executed on a computer and/or on a base station entity of a mobile communication network and/or on a user equipment, or in part on a base station entity and/or in part on a user equipment, causes the computer and/or the base station entity and/or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

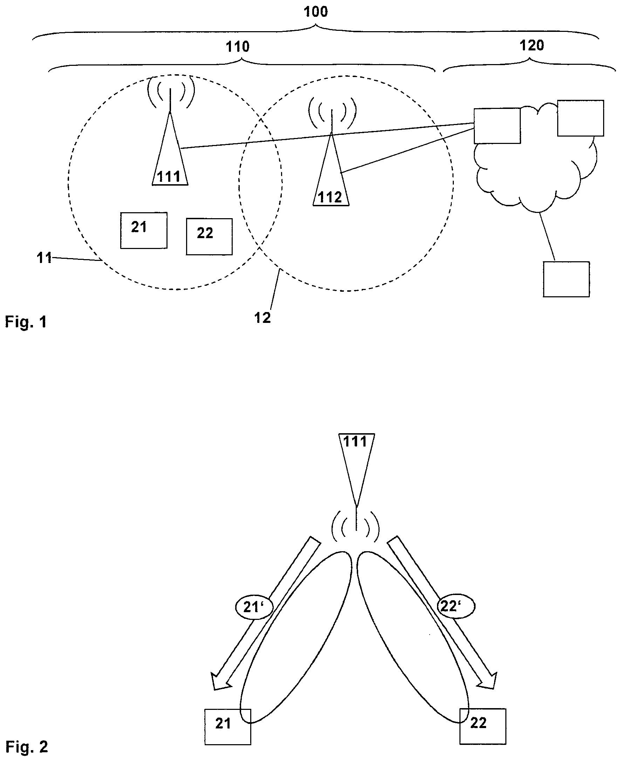

Figure 1 schematically illustrates the situation of a user equipment and a further user equipment in a mobile communication network, the mobile communication network comprising a core network and a radio access network comprising at least one base station entity, wherein the user equipment is served by a base station entity having at least an antenna entity or functionality.
Figure 2 schematically illustrates the situation of the base station entity using, or applying, within its radio cell, multi-user multiple input multiple output technology such that the user equipment and the further user equipment are paired (or co-scheduled), i.e. using, at least partly, the same time-frequency resources within the same radio cell of the base station entity.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 is schematically shown, the telecommunications network 100 comprising an access network 110 (or radio access network 110), and a core network 120. Furthermore, Figure 1 schematically illustrates the situation of a user equipment 21 and of a further user equipment 22 in (or being connected to, or served by) the mobile communication network 100. Both the user equipment 21 and the further user equipment 22 are served by a base station entity 111. The base station entity 111 is part of the radio access network 110, and the radio access network 110 typically comprises, besides the base station entity 111, at least one (but typically a plurality) of further base station entities, only one of which (further base station entity 112) is schematically illustrated in Figure 1. The base station entities 111, 112 typically have, respectively, at least one antenna entity or functionality.

The telecommunications network 100 is especially realized as a mobile (cellular) communication network 100 (and is, hereinafter and at least partly, also called like this). The telecommunications network 100 or mobile communication network 100, especially the core network 120, typically comprises a number of network functions or services; however, such network functions or services are not explicitly indicated by means of reference signs in Figure 1.

The access network 110 comprises a plurality of radio cells 11, 12. In the exemplary situation or scenario shown in Figure 1, the base station entity 111 generates or is associated with or spans the first radio cell 11, and the further base station entity 112 generates or is associated with or spans the second radio cell 12. In the exemplary situation shown in Figure 1, both the first and the second user equipment 21, 22 are connected to the telecommunications network 100 via a radio interface (or air interface) to the base station entity 111. The user equipments 21, 22 are typically, but not necessarily, mobile - i.e. able to move - with respect to the - typically, but not necessarily, static - radio cells 11, 12 or corresponding base station entities 111, 112 of the access network 110. The base station entities 111, 112 comprise, respectively, at least one antenna entity or functionality.

In conventionally known mobile communication networks 100, it is known to apply multi-user multiple input multiple output, MU-MIMO, technology. This technology involves at least two user equipments to be co-scheduled, or paired, i.e. a base station entity serves a user equipment in a manner such that - at least regarding specific time-frequency resources of the air interface of that base station entity - such co-scheduled (or paired) user equipments are simultaneously served by the base station entity, i.e. a radiofrequency signal (comprising or transporting control and/or user plane data) is transmitted, by the base station entity, towards one of the co-scheduled user equipments using a time-frequency resource, and the same time-frequency resource is used, by the base station entity, to transmit a different radiofrequency signal (i.e. comprising or transporting different control and/or user plane data) towards another of the co-scheduled user equipments.

In Figure 2, such a situation is schematically and exemplarily illustrated (for the simple case of two co-scheduled or paired user equipments): The base station entity 111 is using, or applying, within its radio cell 11, multi-user multiple input multiple output technology such that the user equipment 21 and the further user equipment 22 are paired (or co-scheduled), i.e. using, at least partly, the same time-frequency resources within the same radio cell of the base station entity 111.

A requirement to be fulfilled for using, or applying, multi-user multiple input multiple output technology is that the user equipment 21 is provided with first transmission configuration information 21' in view of applying multi-user multiple input multiple output, MU-MIMO, technology (i.e. the user equipment 21 receives, from the base station entity 111, first transmission configuration information 21' and the base station entity 111 transmits, to the user equipment 21, first transmission configuration information 21') and that the further user equipment 22 is provided with second transmission configuration information 22' in view of applying multi-user multiple input multiple output, MU-MIMO, technology (i.e. the further user equipment 22 receives, from the base station entity 111, second transmission configuration information 22' and the base station entity 111 transmits, to the further user equipment 22, second transmission configuration information 22').

According to the present invention, the multi-user multiple input multiple output, MU-MIMO, technology - involving the user equipment 21 and the further user equipment 22 - is applied and the first transmission configuration information 21' comprises at least a part of the second transmission configuration information 22', i.e. the user equipment 21 is provided, by the base station entity 111, with configuration information (or with transmission parameters) that is especially specific to the further user equipment 22. Typically, according to the present invention, symmetrically also the second transmission configuration information 22' comprises at least a part of the first transmission configuration information 21', i.e. the further user equipment 22 is provided, by the base station entity 111, with configuration information (or with transmission parameters) that is especially specific to the user equipment 21.

Thus, especially, the first transmission configuration information 21' comprises first transmission parameters used for serving the user equipment 21 and the second transmission configuration information 22' comprises second transmission parameters used for serving the further user equipment 22, wherein the first transmission configuration information 21' comprises at least part of the second transmission parameters, especially a part of the second transmission parameters that are solely related to the transmission between the base station entity 111 and the further user equipment 22, i.e. a part of the second transmission parameters that are specific to the further user equipment 22.

Furthermore especially, the first transmission configuration information 21' comprises at least one out of the following relating to the second transmission parameters (i.e. being part of the second transmission configuration information 22':
- a demodulation reference signal, DMRS, information used with the further user equipment 22,
- a demodulation reference signal, DMRS, port information used with the further user equipment 22,
-- a modulation coding scheme, MCS, information used with the further user equipment 22.

This additional knowledge or information (compared to the use of conventionally known multi-user multiple input multiple output, MU-MIMO, technology) advantageously provides the possibility, according to the present invention, for the user equipment 21 utilizing, at least a part of the second transmission parameters 22' (provided in (or as part of) the first transmission configuration information 21'), to calculate/estimate and/or reduce interference created by radiofrequency signals transmitted by the base station entity 111 to the further user equipment 22 on the jointly used specific time-frequency resources.

Especially according to the present invention, this is either possible by means of trying to actively reduce interference effects (in the example at, or for, the user equipment 21) created by such radiofrequency signals (that are transmitted by the base station entity 111 to the further user equipment 22 on the jointly used specific time-frequency resources). Alternatively (or cumulatively) according to the present invention this is also possible to be achieved by means of (in the example) the user equipment 21 configuring its own reception antenna arrangement such that the angle of incidence of such interference signals (transmitted by the base station entity 111 to the further user equipment 22) would correspond to a null (or zero radiation (or reception capability) of the antenna characteristic or radiation pattern of the antenna or reception antenna arrangement of the user equipment 21).

Again, symmetrically, it is preferred, according to the present invention that also the second transmission configuration information 22' comprises at least part of the first transmission parameters, especially a part of the first transmission parameters 21' that are solely related to the transmission between the base station entity 111 and the user equipment 21. Furthermore symmetrically, it is preferred that the second transmission configuration information 22' comprises at least one out of the following relating to the first transmission parameters:
-- a demodulation reference signal, DMRS, information used with the user equipment 21,
-- a demodulation reference signal, DMRS, port information used with the user equipment 21,
- a modulation coding scheme, MCS, information used with the user equipment 21.

## Claims

1. Method for using a user equipment (21) with a radio access network (110) of or associated or assigned to a mobile communication network (100), wherein the radio access network (110) comprises at least one base station entity (111), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the method comprises the step of
- the user equipment (21) receiving first transmission configuration information (21') in view of applying multi-user multiple input multiple output, MU-MIMO, technology,
-- the further user equipment (22) receiving second transmission configuration information (22') in view of applying multi-user multiple input multiple output, MU-MIMO, technology, as well as
-- applying multi-user multiple input multiple output, MU-MIMO, technology involving the user equipment (21) and the further user equipment (22), wherein the first transmission configuration information (21') comprises at least a part of the second transmission configuration information (22').

2. Method according to claim 1, wherein the first transmission configuration information (21') comprises first transmission parameters used for serving the user equipment (21) and wherein the second transmission configuration information (22') comprises second transmission parameters used for serving the further user equipment (22), wherein the first transmission configuration information (21') comprises at least part of the second transmission parameters, especially a part of the second transmission parameters that are solely related to the transmission between the base station entity (111) and the further user equipment (22).

3. Method according to one of the preceding claims, wherein the first transmission configuration information (21') comprises at least one out of the following relating to the second transmission parameters:
-- a demodulation reference signal, DMRS, information used with the further user equipment (22),
-- a demodulation reference signal, DMRS, port information used with the further user equipment (22),
-- a modulation coding scheme, MCS, information used with the further user equipment (22).

4. Method according to one of the preceding claims, wherein the user equipment (21) utilizes, at least a part of the second transmission parameters (22'), provided in the first transmission configuration information (21'), to estimate and/or reduce interference created by radiofrequency signals transmitted by the base station entity (111) to the further user equipment (22) on the jointly used specific time-frequency resources.

5. Method according to one of the preceding claims, wherein the first and/or second transmission configuration information (21', 22') is provided, by the base station entity (111), to the user equipment (21) and/or the further user equipment (22) using a dedicated control channel, especially using an Radio Resource Control, RRC, protocol or Medium Access Control, MAC, information elements or Downlink Control Information, DCI, carried on a Physical Downlink Control Channel, PDCCH.

6. Method according to one of the preceding claims, wherein the first transmission configuration information (21') is transmitted, by the base station entity (111), to the user equipment (21) by means of one out of the following:
- a single configuration message, the single configuration message comprising all of the first transmission configuration information (21'), especially the first transmission parameters used, by the base station entity (111), for serving the user equipment (21) as well as at least a part of the second transmission parameters that are solely related to the transmission between the base station entity (111) and the further user equipment (22),
-- at least a first configuration message and a second configuration message, wherein the first configuration message especially comprises the first transmission configuration information (21'), especially regarding the first transmission parameters used, by the base station entity (111), for serving the user equipment (21), and wherein the second configuration message especially comprises at least a part of the second transmission parameters that are solely related to the transmission between the base station entity (111) and the further user equipment (22).

7. User equipment (21) for being used with a radio access network (110) of or associated or assigned to a mobile communication network (100), wherein the radio access network (110) comprises at least one base station entity (111), wherein the user equipment (21) is served by the base station entity (111) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the user equipment (21) is configured such that
- the user equipment (21) receives first transmission configuration information (21') in view of applying multi-user multiple input multiple output, MU-MIMO, technology,
-- the multi-user multiple input multiple output, MU-MIMO, technology is applied, involving the user equipment (21) and the further user equipment (22), wherein the first transmission configuration information (21') comprises at least a part of a second transmission configuration information (22') having been transmitted to the further user equipment (22).

8. Base station entity (111) for using a user equipment (21) with a radio access network (110) of or associated or assigned to a mobile communication network (100), wherein the base station entity (111) is part of the radio access network (110), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources, wherein, in order to use both the user equipment (21) and the further user equipment (22) with the radio access network (110) using multi-user multiple input multiple output, MU-MIMO, technology, the base station entity (111) is configured such that
- the base station entity (111) transmits, to the user equipment (21), first transmission configuration information (21') in view of applying multi-user multiple input multiple output, MU-MIMO, technology,
- the base station entity (111) transmits, to the further user equipment (22), second transmission configuration information (22') in view of applying multi-user multiple input multiple output, MU-MIMO, technology, as well as
-- the base station entity (111) applies multi-user multiple input multiple output, MU-MIMO, technology involving the user equipment (21) and the further user equipment (22), wherein the first transmission configuration information (21') comprises at least a part of the second transmission configuration information (22').

9. System or mobile communication network (100) for using a user equipment (21) with a radio access network (110) of or associated or assigned to a mobile communication network (100), wherein the radio access network (110) comprises at least one base station entity (111), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the method comprises the step of
- the user equipment (21) receiving first transmission configuration information (21') in view of applying multi-user multiple input multiple output, MU-MIMO, technology,
-- the further user equipment (22) receiving second transmission configuration information (22') in view of applying multi-user multiple input multiple output, MU-MIMO, technology, as well as
- applying multi-user multiple input multiple output, MU-MIMO, technology involving the user equipment (21) and the further user equipment (22), wherein the first transmission configuration information (21') comprises at least a part of the second transmission configuration information (22').

10. Program comprising a computer readable program code, which, when executed on a computer and/or on a base station entity (111) of a mobile communication network (100) and/or on a user equipment, or in part on a base station entity (111) and/or in part on a user equipment, causes the computer and/or the base station entity (111) and/or the user equipment to perform a method according one of claims 1 to 6.

11. Computer-readable medium comprising instructions which when executed on a computer and/or on a base station entity (111) of a mobile communication network (100) and/or on a user equipment, or in part on a base station entity (111) and/or in part on a user equipment, causes the computer and/or the base station entity (111) and/or the user equipment to perform a method according one of claims 1 to 6.

## Amended claims

### Amended claims in accordance with Rule 137(2) EPC.

1. Method for using a user equipment (21) with a radio access network (110) of or associated or assigned to a mobile communication network (100), wherein the radio access network (110) comprises at least one base station entity (111), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the method comprises the step of
-- the user equipment (21) receiving first transmission configuration information (21') in view of applying multi-user multiple input multiple output, MU-MIMO, technology,
-- the further user equipment (22) receiving second transmission configuration information (22') in view of applying multi-user multiple input multiple output, MU-MIMO, technology, as well as
-- applying multi-user multiple input multiple output, MU-MIMO, technology involving the user equipment (21) and the further user equipment (22), wherein the first transmission configuration information (21') comprises at least a part of the second transmission configuration information (22').

2. Method according to claim 1, wherein the first transmission configuration information (21') comprises first transmission parameters used for serving the user equipment (21) and wherein the second transmission configuration information (22') comprises second transmission parameters used for serving the further user equipment (22), wherein the first transmission configuration information (21') comprises at least part of the second transmission parameters, especially a part of the second transmission parameters that are solely related to the transmission between the base station entity (111) and the further user equipment (22).

3. Method according to one of the preceding claims, wherein the first transmission configuration information (21') comprises at least one out of the following relating to the second transmission parameters:
-- a demodulation reference signal, DMRS, information used with the further user equipment (22),
-- a demodulation reference signal, DMRS, port information used with the further user equipment (22),
-- a modulation coding scheme, MCS, information used with the further user equipment (22).

4. Method according to one of the preceding claims, wherein the user equipment (21) utilizes, at least a part of the second transmission parameters (22'), provided in the first transmission configuration information (21'), to estimate and/or reduce interference created by radiofrequency signals transmitted by the base station entity (111) to the further user equipment (22) on the jointly used specific time-frequency resources.

5. Method according to one of the preceding claims, wherein the first and/or second transmission configuration information (21', 22') is provided, by the base station entity (111), to the user equipment (21) and/or the further user equipment (22) using a dedicated control channel, especially using an Radio Resource Control, RRC, protocol or Medium Access Control, MAC, information elements or Downlink Control Information, DCI, carried on a Physical Downlink Control Channel, PDCCH.

6. Method according to one of the preceding claims, wherein the first transmission configuration information (21') is transmitted, by the base station entity (111), to the user equipment (21) by means of one out of the following:
-- a single configuration message, the single configuration message comprising all of the first transmission configuration information (21'), especially the first transmission parameters used, by the base station entity (111), for serving the user equipment (21) as well as at least a part of the second transmission parameters that are solely related to the transmission between the base station entity (111) and the further user equipment (22),
-- at least a first configuration message and a second configuration message, wherein the first configuration message especially comprises the first transmission configuration information (21'), especially regarding the first transmission parameters used, by the base station entity (111), for serving the user equipment (21), and wherein the second configuration message especially comprises at least a part of the second transmission parameters that are solely related to the transmission between the base station entity (111) and the further user equipment (22).

7. User equipment (21) for being used with a radio access network (110) of or associated or assigned to a mobile communication network (100), wherein the radio access network (110) comprises at least one base station entity (111), wherein the user equipment (21) is served by the base station entity (111) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the user equipment (21) is configured such that
-- the user equipment (21) receives first transmission configuration information (21') in view of applying multi-user multiple input multiple output, MU-MIMO, technology,
-- the multi-user multiple input multiple output, MU-MIMO, technology is applied, involving the user equipment (21) and the further user equipment (22), wherein the first transmission configuration information (21') comprises at least a part of a second transmission configuration information (22') having been transmitted to the further user equipment (22).

8. Base station entity (111) for using a user equipment (21) with a radio access network (110) of or associated or assigned to a mobile communication network (100), wherein the base station entity (111) is part of the radio access network (110), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the base station entity (111) is configured such that
-- the base station entity (111) transmits, to the user equipment (21), first transmission configuration information (21') in view of applying multi-user multiple input multiple output, MU-MIMO, technology,
-- the base station entity (111) transmits, to the further user equipment (22), second transmission configuration information (22') in view of applying multi-user multiple input multiple output, MU-MIMO, technology, as well as
-- the base station entity (111) applies multi-user multiple input multiple output, MU-MIMO, technology involving the user equipment (21) and the further user equipment (22), wherein the first transmission configuration information (21') comprises at least a part of the second transmission configuration information (22').

9. System or mobile communication network (100) for using a user equipment (21) with a radio access network (110) of or associated or assigned to a mobile communication network (100), wherein the radio access network (110) comprises at least one base station entity (111), wherein the base station entity (111) serves the user equipment (21) using multi-user multiple input multiple output, MU-MIMO, technology, in a manner such that, at least regarding specific time-frequency resources of the air interface of the base station entity (111), both the user equipment (21) and a further user equipment (22) are simultaneously served by the base station entity (111) or provided with transmission resources,
wherein, in order to use both the user equipment (21) and the further user equipment (22) with the radio access network (110) using multi-user multiple input multiple output, MU-MIMO, technology, the method comprises the step of
-- the user equipment (21) receiving first transmission configuration information (21') in view of applying multi-user multiple input multiple output, MU-MIMO, technology,
-- the further user equipment (22) receiving second transmission configuration information (22') in view of applying multi-user multiple input multiple output, MU-MIMO, technology, as well as
-- applying multi-user multiple input multiple output, MU-MIMO, technology involving the user equipment (21) and the further user equipment (22), wherein the first transmission configuration information (21') comprises at least a part of the second transmission configuration information (22').

10. Program comprising a computer readable program code, which, when executed on a base station entity (111) of a mobile communication network (100) and/or on a user equipment, or in part on a base station entity (111) and/or in part on a user equipment, causes the base station entity (111) and/or the user equipment to perform a method according one of claims 1 to 6.

11. Computer-readable medium comprising instructions which when executed on a base station entity (111) of a mobile communication network (100) and/or on a user equipment, or in part on a base station entity (111) and/or in part on a user equipment, causes the base station entity (111) and/or the user equipment to perform a method according one of claims 1 to 6.
